# EUROPÄISCHE PATENTANMELDUNG

(11) **EP 2 995 411 A1**
(43) Veröffentlichungstag der Anmeldung: **16.03.2016**
(21) Anmeldenummer: 14184329.2
(22) Anmeldetag: 10.09.2014
(51) Int. Cl.: B23K 20/12

(54) **Vorrichtung zum Reibrührschweißen**

(71) Anmelder: Helmholtz-Zentrum Geesthacht Zentrum für Material- und Küstenforschung GmbH, 21502 Geesthacht (DE)
(72) Erfinder: Hütsch, Leon Leander, 21029 Hamburg (DE); dos Santos, Jorge Fernandez, 21395 Tespe (DE)
(74) Vertreter: UEXKÜLL & STOLBERG

(57) **Zusammenfassung**

Dargestellt und beschrieben ist eine Vorrichtung (1) zum Reibrührschweißen mit einen Stift (3), einem oberen Schulterelement (5), einem Zwischenschulterelement (7, 7') und einem unteren Schulterelement (9), wobei zwischen dem oberen Schulterelement (5) und dem Zwischenschulterelement (7, 7') eine erster zylindrischer Eingriffsabschnitt (21) und zwischen dem Zwischenschulterelement (7, 7') und dem unteren Schulterelement (9) ein zweiter zylinderförmiger Eingriffsabschnitt (23) vorgesehen sind, die sich axial in Richtung der Drehachse (11) erstrecken und deren Umfangsfläche zum Eingriff mit einem oder mehreren insbesondere ein Kastenprofil bildenden Werkstücken vorgesehen ist.

## Beschreibung

Die vorliegende Erfindung betrifft eine Vorrichtung zum Reibrührschweißen mit einem um eine Drehachse von einem ersten Drehantrieb antreibbaren Stift, der ein Antriebsende und ein freies Ende aufweist, wobei zwischen dem Antriebsende und dem freien Ende zwei zylindrische Eingriffsabschnitte vorgesehen sind, die sich axial in Richtung der Drehachse erstrecken und deren Umfangsfläche zum Eingriff mit einem oder mehreren Werkstücken vorgesehen ist, mit einem oberen Schulterelement, das auf der zum Antriebsende weisenden Seite des oberen Eingriffsabschnitts konzentrisch bezüglich der Drehachse um den Stift angeordnet ist und das eine zum oberen Eingriffsabschnitt weisende sich quer zur Drehachse erstreckende obere Anlagefläche aufweist, mit einem Zwischenschulterelement, das zwischen dem oberen und dem unteren Eingriffsabschnitt konzentrisch bezüglich der Drehachse um den Stift angeordnet ist und das auf der zum Antriebsende weisenden Seite eine zum oberen Eingriffsabschnitt weisende sich quer zur Drehachse erstreckende erste Anlagefläche aufweist und das auf der zum freien Ende weisenden Seite eine zum unteren Eingriffsabschnitt weisende sich quer zur Drehachse erstreckende zweite Anlagefläche aufweist, und mit einem unteren Schulterelement, das auf der zum freien Ende weisenden Seite des unteren Eingriffsabschnitts konzentrisch bezüglich der Drehachse um den Stift angeordnet ist und das eine zum unteren Eingriffsabschnitt weisende sich quer zur Drehachse erstreckende untere Anlagefläche aufweist.

Das Prinzip des Reibschweißens beinhaltet, dass das Material eines oder mehrerer Werkstücke durch Reibung zwischen dem Werkstück und einem weiteren Werkstück oder einem Werkzeug zunächst plastifiziert wird und sich anschließend wieder verfestigt. Beim Reibrührschweißen werden zunächst die zwei zu verbindenden, in der Regel metallischen Werkstücke aneinander angelegt. Das kann beispielsweise heißen, dass zwei flächige metallische Werkstücke oder Bleche Oberfläche an Oberfläche übereinander gelegt werden (Überlappverbindung) oder aber so nebeneinander positioniert werden, dass die schmalen Seitenkanten aneinander anliegen (Stumpfstoß-Verbindung). Danach wird ein Reibrührschweißwerkzeug im Bereich der Kontaktfläche in das Material von mindestens einem der beiden Werkstücke - z.B. über eine Bohrung oder vom Rand her - eingeführt.

Durch eine Rotation des Werkzeuges wird ein Reibrührvorgang bewirkt, wobei das Werkzeug an wenigstens einem Werkstück reibt und das Material von mindestens einem der beiden Werkstücke plastifiziert. Dabei kann das Reibrührschweißwerkzeug entlang der Grenzfläche der beiden Werkstücke bewegt werden. Das plastifizierte Material an der Grenzfläche der beiden Werkstücke kühlt anschließend ab und bildet die Schweißnaht, die die beiden Werkstücke verbindet.

Aus dem Stand der Technik, wie beispielsweise der WO 2006/055530, sind bereits zahlreiche Vorrichtungen zum Reibrührschweißen bekannt. Allen diesen Vorrichtungen gemeinsam ist ein im Wesentlichen zylinder- oder kegelförmiger Stift mit einem Eingriffsabschnitt zum Eingriff mit mindestens einem Werkstück und mit einem Schulterelement, das zur Anlage an die Oberfläche des mindestens einen Werkstücks vorgesehen ist. Stift und Schulterelement werden drehend angetrieben, wobei der Stift z.B. zwischen zwei zu verbindende und aneinander angelegte Werkstücke so weit in die Werkstücke eindringt, bis das Schulterelement an der Oberfläche wenigstens eines der Werkstücke anliegt.

Durch die Reibung von Stift und Schulterelement an den Werkstücken wird das Material im angrenzenden Bereich der Werkstücke plastifiziert. Bei einer gleichzeitigen Vorwärtsbewegung der Vorrichtung entlang der Kontaktfläche der beiden Werkstücke wird von dem rotierenden Stift plastifiziertes Material in Bewegungsrichtung des Stifts betrachtet hinter diese transportiert, wo es sich mit weiterem plastifizierten Material der beiden Werkstücke verbindet und eine Schweißnaht bildet.

Um das Reibrührschweißwerkzeug an beiden gegenüber liegenden Oberflächen der Werkstücke abstützen zu können und die Werkstücke zueinander auszurichten bzw. aneinander zu drücken, kann eine Vorrichtung zum Reibrührschweißen mit einem ersten und einem zweiten Schulterelement - ein sogenanntes Bobbin-Werkzeug - verwendet werden, wobei das erste und das zweite Schulterelement an gegenüberliegenden Oberflächen des oder der Werkstücke anliegen. Eine derartige Vorrichtung ist beispielsweise aus der JP 2008/296285 oder aus der EP 1 738 856 B1 bekannt.

Problematisch bei der Vorrichtung zum Reibrührschweißen in Bobbin-Konfiguration ist jedoch, dass der Stift, um ein Drehmoment auf beide Schulterelemente zu übertragen und gleichzeitig an dem zu plastifizierenden Bereich des mindestens einen Werkstücks zu reiben, sehr hohe mechanische und thermische Lasten aufnehmen muss. Um die Vorrichtung nicht zu zerstören, wird die maximal erreichbare Geschwindigkeit bei der Vorwärtsbewegung des Stiftes durch das Werkstück somit begrenzt, wodurch sich auch die Prozessdauer des gesamten Schweißprozesses verlängert. Die aus mechanischen Gesichtspunkten notwendige begrenzte Geschwindigkeit bei der Vorwärtsbewegung des Stiftes führt jedoch zu überhöhten Prozesstemperaturen im plastifizierten Bereich des Werkstücks und im Bereich des Stiftes, die sich einerseits negativ auf die Qualität der Schweißverbindung auswirken und andererseits den Stift selbst beschädigen können.

Außerdem liegen die Prozessgeschwindigkeiten bei Einsatz eines Bobbin-Werkzeugs deutlich unter den Prozessgeschwindigkeiten von konventionellen Reibrührschweißwerkzeugen.

Um Werkstücke zu einem Hohl- oder Kastenprofil mittels des beschriebenen Reibrührschweißverfahrens zu verbinden, muss jede Schweißnaht einzeln gefügt werden, was dazu führt, dass das Werkstück für die zweite Schweißnaht umgedreht, neu eingespannt und die Maschine neu eingerichtet werden muss. Da hierbei das zweite Schulterelement in das Hohlprofil eingebracht werden muss, um die rückseitige Abstützung der Werkstücke im Schweißnahtbereich zu gewährleisten, können bei engen Kastenprofilen jedoch geometrische Konflikte und Kollisionen auftreten, wodurch ein Einsatz von Bobbin-Werkzeugen in diesem Fall nicht möglich ist.

Durch Mehrschulterwerkzeuge lässt es sich vermeiden, dass die Schweißnähte einzeln hergestellt werden müssen. Dabei weist das Reibrührschweißwerkzeug mehrere Schultern auf, die weitere Eingriffsbereiche ausbilden und somit die Werkstücke an mehreren parallel verlaufenden Schweißnähten gleichzeitig zusammenfügen können. Die zusätzlichen Zwischenschultern umfassen dabei jeweils eine Anlagefläche für eine Oberfläche des Werkstücks. Die Zwischenschultern sind in ihrer axialen Position am Stift fixiert, wodurch die ausgebildeten Eingriffsabschnitte geometrisch stabil sind. Derartige Vorrichtung sind beispielsweise aus der EP 1 793 961 B1 oder aus der US 2009/0230173 A1 bekannt.

Die Anwendbarkeit im Falle von engen Kastenprofilen ist damit allerdings nur bedingt gegeben. Auch hier können geometrische Konflikte auftreten. Zwar ist es vorstellbar, dass die zusätzlichen Zwischenschultern konfliktfrei in die Kastenprofile eingeführt werden können. Da der Stift aber sowohl Drehmomente auf die mehreren Schultern übertragen und gleichzeitig in den mehreren Schweißnahtbereichen ausreichend Reibung und Wärme bereitstellen muss, um das Material zu plastifizieren, kann die thermische und mechanische Belastung für sehr dünnwandige Profile, die womöglich sogar noch unterschiedliche Materialstärken aufweisen, zu groß sein, um noch qualitativ hochwertige Schweißnähte zu bilden.

Ausgehend vom Stand der Technik ist es daher die Aufgabe der vorliegenden Erfindung, eine Vorrichtung zum zweiseitigen Reibrührschweißen enger, dünnwandiger Werkstücke bereitzustellen, mit der die mechanische und thermische Belastung des Stiftes sowie die thermische Belastung der Werkstücke reduziert wird.

Diese Aufgabe wird dadurch gelöst, dass das obere Schulterelement, das Zwischenschulterelement und das untere Schulterelement derart gehaltert sind, dass eine aus der oberen Anlagefläche und der ersten Anlagefläche in Bezug auf die Drehachse drehfest mit einem Antrieb gekoppelt ist und die andere aus der oberen Anlagefläche und der ersten Anlagefläche frei drehbar in Bezug auf den Stift oder reibschlüssig mit dem Stift gekoppelt ist und dass eine aus der unteren Anlagefläche und der zweiten Anlagefläche in Bezug auf die Drehachse drehfest mit einem Antrieb gekoppelt ist und die andere aus der unteren Anlagefläche und der zweiten Anlagefläche frei drehbar in Bezug auf den Stift oder reibschlüssig mit dem Stift gekoppelt ist.

Wenn in der vorliegenden Beschreibung von einem "oberen" und einem "unteren" Element wie einem "oberen" und einem "unteren Schulterelement" die Rede ist, bezeichnet das obere Element immer dasjenige, das dem Antrieb für dem Stift näher liegt, während das untere Element das von dem Antrieb für den Stift weiter entfernte ist. Die Begriffe "oben" und "unten" sollen sich also nicht auf die absolute Anordnung im Raum beziehen, sondern vielmehr die Lage relativ zum Antrieb angeben. Die gewählten Begriffe resultieren daraus, dass der Antrieb in der Regel oberhalb des Werkzeugs angeordnet ist.

Mit dem erfindungsgemäßen Aufbau wird erreicht, dass sowohl bei der im Bereich des oberen Eingriffsabschnitts erzeugten als auch bei der im Bereich des unteren Eingriffsabschnitts erzeugten Reibschweißnaht eine der parallel zur Oberfläche der Werkstücke verlaufende Anlagefläche, ggf. durch eine Verbindung mit dem Stift oder durch einen separaten Antrieb, drehend angetrieben ist und somit Energie in die Werkstücke mit einträgt, während die jeweils andere gegenüberliegende Anlagefläche entweder lediglich an den Werkstücken anliegen kann und nicht rotiert oder auf diese aufgrund des Reibschlusses nur ein verringertes Drehmoment übertragen wird. In letzterem Fall ist der Energieeintrag in die Werkstücke durch die nur reibschlüssig angekoppelten Anlageflächen gegenüber einer starren Kopplung deutlich reduziert.

Damit wird insgesamt die mechanische Belastung des Stifts reduziert, weil dieser ein geringeres Drehmoment auf die Anlageflächen übertragen muss. Außerdem wird auch die mechanische Belastung der Werkstücke im Bereich der Schweißnaht vermindert, und es kommt nicht so leicht zu einem Versagen sowohl bei den Werkstücken als auch bei dem Stift.

Somit lässt sich feststellen, dass mit der erfindungsgemäßen Anordnung mit jeweils einer gegenüber dem Stift entweder frei drehbaren oder nur reibschlüssig gekoppelten Anlagefläche und einer dauerhaft mit fest vorgegebenem Drehmoment angetriebenen Anlagefläche sowie einem an das Hohlmaß des Werkstücks angepassten Zwischenschulterelement ein Schweißprozess von dünnwandigen, insbesondere kastenprofilförmigen Werkstücken ermöglicht wird, wobei eine höhere Qualität der Schweißverbindung erzielt und ein schnellerer, effizienterer Schweißprozess ermöglicht wird, wobei die Gefahr des Versagens des Schweißwerkzeugs oder der Werkstücke deutlich verringert ist.

In einer bevorzugten Ausführungsform ist das zwischen dem oberen Schulterelement und dem unteren Schulterelement vorgesehene Zwischenschulterelement frei um die Drehachse drehbar mit dem Stift verbunden ist.

Auf diese Weise überträgt der Stift kein Drehmoment auf das Zwischenschulterelement, sondern dieses dreht sich frei relativ zu dem Stift. Das Zwischenschulterelement führt folglich keine Drehbewegung gegenüber der Oberflächen des mindestens einen Werkstücks aus, weswegen auch keine aus der Drehbewegung resultierende Reibung auftritt, die wiederum für eine zusätzliche Erwärmung des Zwischenschulterelements und des mindestens einen Werkstücks verantwortlich wäre.

Grundsätzlich ist das Zwischenschulterelement dabei in seinen Abmessungen derart angepasst, dass es die Abmessungen eines gewünschten zu fügenden Profils nachbildet. Dadurch bildet es eine Anlagefläche sowohl für das mindestens eine Werkstück im Bereich des oberen Eingriffsabschnitts, als auch im Bereich des unteren Eingriffsabschnitts aus. Da sich die Anlageflächen des Zwischenschulterelements unmittelbar bis an die Eingriffsabschnitte des Stifts erstrecken, erzeugen lediglich die Eingriffsabschnitte bei deren Rotation Reibungswärme. Das Zwischenschulterelement trägt nicht dazu bei. Die benötigte Reibungswärme für die Plastifizierung des Materials in der ersten Fügungszone wird durch den oberen Eingriffsabschnitt des Stiftes und die obere Anlagefläche des oberen Schulterelements und in der zweiten Fügungszone durch den unteren Eingriffsabschnitt des Stiftes und die untere Anlagefläche des unteren Schulterelements erzeugt, wobei der Stift ein Drehmoment auf das untere Schulterelement überträgt.

Die mechanische und thermische Belastung des Stiftes wird hier somit durch das frei rotierbare Zwischenschulterelement reduziert. Auch die thermische Belastung des Werkstücks bzw. der Werkstücke wird reduziert.

Bei zunehmendem Eintrag von Reibungsenergie und damit einem Anstieg der Temperatur der Werkstücke nimmt zwar die Plastizität des Werkstoffes zu und die Viskosität nimmt ab. Daraus folgend nimmt, bei konstanter Vorschubgeschwindigkeit auch die mechanische Belastung auf das Werkzeug ab. Ein schnelleres Schweißen kann daher tendenziell eher bei höheren Temperaturen erreicht werden. Es hat sich aber gezeigt, dass die thermomechanische Belastung am Stift durch die frei drehbare Zwischenschulter abnimmt, was eine längere Lebensdauer des Werkzeuges zur Folge hat.

In einer alternativen bevorzugten Ausführungsform ist die Vorrichtung zur Realisierung eines Reibschlusses zwischen jeweils einer der Anlageflächen und dem Stift derart ausgestaltet, dass an dem Stift ein Reibblock drehfest gehaltert ist, an dem eine erste und eine zweite Reibfläche ausgebildet sind, wobei die erste Anlagefläche an einem ersten Schulterteil ausgebildet ist und das erste Schulterteil mit einer drehfest damit verbundenen dritten Reibfläche versehen ist, wobei die zweite Anlagefläche an einem zweiten Schulterteil ausgebildet ist und das zweite Schulterteil mit einer drehfest damit verbundenen vierten Reibfläche versehen ist und wobei Vorspannmittel vorgesehen sind, die die erste Reibfläche gegen die dritte Reibfläche und die zweite Reibfläche gegen die vierte Reibfläche vorspannen. Durch die aufeinander zu vorgespannten Reibflächen, von denen eine drehfest mit dem Stift und die andere drehfest mit der jeweiligen Anlagefläche verbunden ist, werden die Anlageflächen reibschlüssig mit dem Stift gekoppelt.

In weiter bevorzugter Weise sind die erste und die zweite Reibfläche als geneigt zu der Drehachse um die Drehachse umlaufende Flächen ausgebildet, wobei die dritte Reibfläche an einem drehfest an und axial in Bezug auf die Drehachse relativ zu dem ersten Schulterteil verschiebbar gehalterten ersten Ringelement ausgebildet ist, geneigt zu der Drehachse verläuft und der ersten Reibfläche gegenüber liegt. Des Weiteren ist die vierte Reibfläche an einem drehfest an und axial in Bezug auf die Drehachse relativ zu dem zweiten Schulterteil verschiebbar gehalterten zweiten Ringelement ausgebildet, verläuft geneigt zu der Drehachse und liegt der zweiten Reibfläche gegenüber. Schließlich ist zwischen dem ersten Schulterteil und dem ersten Ringelement ein erstes Federelement vorgesehen, das das erste Ringelement axial in Bezug auf die Drehachse in Richtung des Reibblocks vorspannt, und zwischen dem zweiten Schulterteil und dem zweiten Ringelement ist ein zweites Federelement vorgesehen, das das zweite Ringelement axial in Bezug auf die Drehachse in Richtung des Reibblocks vorspannt. Durch die Wahl der Federelemente sowie eine Einstellung der durch diese ausgeübten Vorspannung kann das maximal von dem Stift auf die Anlageflächen übertragene Drehmoment eingestellt werden.

Weiterhin kann in bevorzugter Weise die erste Anlagefläche an einem lösbar am ersten Schulterteil gehalterten ersten Anlageelement ausgebildet sein, wobei die zweite Anlagefläche an einem lösbar am zweiten Schulterteil gehalterten zweiten Anlageelement ausgebildet ist. Dann können die Anlageflächen bei Verschleiß leicht ausgetauscht oder an andere Abmessungen der Werkstücke angepasst werden.

In einer bevorzugten Ausführungsform ist das untere Schulterelement in wenigstens einer fest vorgegebenen axialen Position relativ zu dem Stift gehaltert. Weiterhin sind das untere Schulterelement und das obere Schulterelement axial verschiebbar relativ zum Stift gehaltert. Auf diese Weise kann der Abstand des oberen Schulterelements zu dem unteren Schulterelement sowie der Abstand des Zwischenschulterelements zu dem unteren Schulterelement und somit die Größe des oberen und unteren Eingriffsabschnitts verändert werden, wodurch die Vorrichtung an verschiedene Werkstückabmessungen angepasst werden kann. Durch die axiale Verschiebbarkeit in Verbindung mit der festen Geometrie des Zwischenschulterelementes lassen sich auftretende Schwankungen der Materialstärke während des Prozesses durch Heben und Absenken des Stiftes zusammen mit dem unteren Schulterelement, also mit Anpassung der Größe der Eingriffsbereiche, ausgleichen. Dabei erfüllt das Zwischenschulterelement weiterhin die Aufgabe, die profilförmigen Werkstücke abzustützen, sodass der Querschnitt sich nicht verändert.

In einer weiteren bevorzugten Ausführungsform kann mit einem drehfest an dem Stift angebrachten unteren Schulterelement Druck auf das Werkstück bzw. die Werkstücke ausgeübt werden, um eine bessere Abstützwirkung zu erzielen. In Verbindung mit der fixierten axialen Position in Bezug auf den Stift, wird dieser Druck ausgeübt, indem beispielsweise der Stift eine Vorspannung erfährt und eine dauerhafte Druckkraft in Richtung der Werkstücke ausübt. Wenn die untere Anlagefläche des unteren Schulterelements an den Werkstücken anliegt, kann dieses zu der thermischen und mechanischen Beeinflussung der Werkstücke beitragen, da sich das untere Schulterelement durch eine drehfeste Verbindung mit dem Stift mitdrehen kann und dann zu einem zusätzlichen Energieeintrag in die Fügezone führt.

In noch einer weiteren bevorzugten Ausführungsform ist das Zwischenschulterelement als Hülse mit zwei sich radial zur Drehachse erstreckenden Bodenflächen und einer zylindrischen, sich parallel zu Drehachse und zwischen den Bodenflächen erstreckender Seitenwandung ausgebildet, wobei in den Bodenflächen die erste und zweite Anlagefläche ausgebildet ist. Durch eine auf die Profilform angepasste Ausführung des Zwischenschulterelements, bei dem der Abstand zwischen den Anlageflächen dem Abstand der dem Zwischenschulterelement zugewandten Oberflächen des Werkstücks entspricht, erfüllt das Zwischenschulterelement die Aufgabe, die profilförmigen Werkstücke während des Fügeprozesses abzustützen. Weiterhin wird mit einem solchen Aufbau des Zwischenschulterelements erreicht, dass die axiale Position des Zwischenschulterelements angepasst werden kann.

In einer besonders bevorzugten Ausführungsform davon ist ein zweiter Drehantrieb vorgesehen, der mit dem oberen Schulterelement gekoppelt ist. In Verbindung mit einem frei um die Drehachse drehbaren Zwischenschulterelement kann die thermische und mechanische Belastung des Stifts und des Werkstücks besser kontrolliert werden. Dadurch ist es möglich, bei Bedarf zusätzliche Reibungsenergie am Werkstück durch eine Drehung des oberen Schulterelements bereitzustellen. Die Drehgeschwindigkeit des oberen Schulterelements lässt sich dabei unabhängig von der Drehgeschwindigkeit des Stiftes einstellen. Durch diese Variabilität der thermischen Last während des Fügeprozesses des Werkstücks lässt sich die Qualität der Schweißverbindung weiter steigern.

Besonders bevorzugt ist es ferner, wenn eine erste axiale Verfahreinrichtung vorgesehen ist, die mit dem Stift gekoppelt ist. Ist die Wandstärke des dünnwandigen, profilförmigen Werkstücks nicht konstant, lässt sich die Schweißvorrichtung während des Fügeprozesses an die geänderten Wandstärken anpassen. Da das untere Schulterelement in einer fest vorgegebenen axialen Position relativ zu dem Stift gehaltert ist, folgt das untere Schulterelement den axialen Hubbewegungen, die durch die erste axiale Verfahreinrichtung auf den Stift übertragen werden. Wird die Wandstärke kleiner, kann durch ein axiales Verfahren in Richtung des Antriebsendes des Stiftes die Anlagefläche des unteren Schulterelements in Anlage mit der Oberfläche des Werkstücks gehalten werden. Die Lage des unteren Eingriffsabschnitts wird auf diese Weise ggf. verändert und an die neue Werkstückgeometrie angepasst.

In einer weiteren bevorzugten Ausführungsform ist eine weitere axiale Verfahreinrichtung vorgesehen, die mit dem oberen Schulterelement gekoppelt ist. Wie im zuvor beschriebenen Fall lässt sich damit die Schweißvorrichtung während des Fügeprozesses an geänderte Wandstärken des Werkstoffes anpassen. Ändert sich die Wandstärke in der ersten Fügezone, lässt sich durch eine Hubbewegung, die durch die zweite axiale Verfahreinrichtung auf das obere Schulterelement übertragen wird, die obere Anlagefläche des oberen Schulterelements in Anlage mit der Oberfläche des Werkstücks halten. Da das obere Schulterelement in dieser Ausführungsform axial verschiebbar relativ zu dem Stift gehaltert ist, ist das axiale Verschieben entkoppelt von axialen Bewegungen des Stiftes. Der obere Eingriffsabschnitt und der untere Eingriffsabschnitt lassen sich somit unabhängig von einander auf verschiedene Wandstärken in der jeweilige Fügezone einstellen.

Die vorliegende Erfindung wird im Folgenden anhand einer zwei Ausführungsbeispiele darstellenden Zeichnung erläutert, wobei
- Fig. 1: eine Querschnittsansicht eines ersten Ausführungsbeispiels einer erfindungsgemäßen Vorrichtung zum Reibrührschweißen mit einem kastenprofilförmigen Werkstück und mit schematischer Darstellung der Drehantriebe und der axialen Verfahreinrichtungen zeigt,
- Fig. 2: eine perspektivische Darstellung des Ausführungsbeispiels aus Fig. 1 mit einem kastenprofilförmigen Werkstück ohne die Antriebe ist,
- Fig. 3: eine Querschnittsansicht eines zweiten Ausführungsbeispiels einer erfindungsgemäßen Vorrichtung zum Reibrührschweißen mit schematischer Darstellung der Drehantriebe und der axialen Verfahreinrichtungen zeigt und
- Fig. 4: eine vergrößerte Querschnittsansicht des Zwischenschulterelements des Ausführungsbeispiels aus Fig. 3 zeigt.

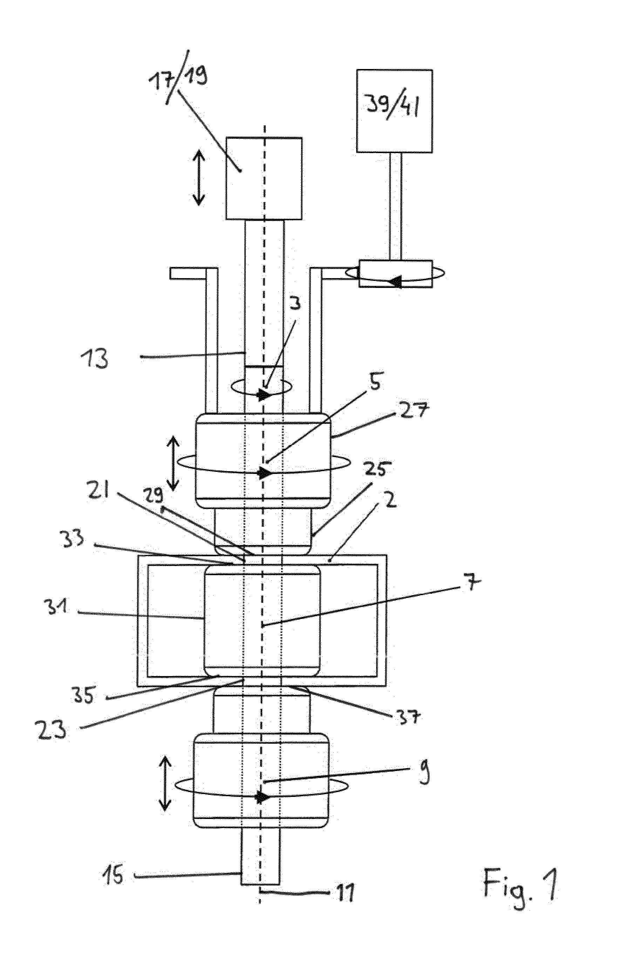

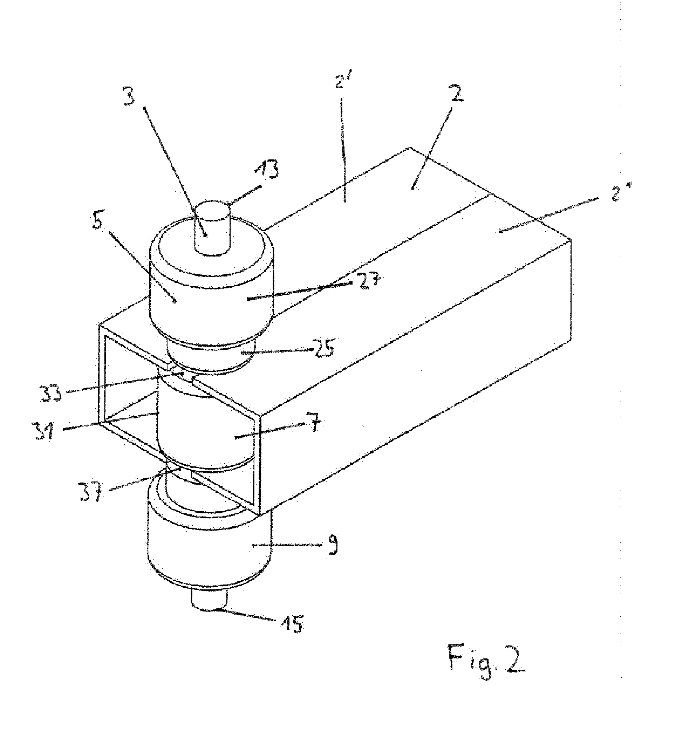

In Fig. 1 und 2 ist ein Ausführungsbeispiel einer erfindungsgemäßen Vorrichtung 1 zum Reibrührschweißen mit einem kastenprofilförmigen Werkstück 2 dargestellt, das aus einem ersten Werkstückteil 2' und einem zweiten Werkstückteil 2" gebildet ist. Die Vorrichtung 1 zum Reibrührschweißen weist einen Stift 3, ein oberes Schulterelement 5, ein Zwischenschulterelement 7 und ein unteres Schulterelement 9 auf.

Der Stift 3 hat eine im Wesentlichen zylindrische Form und wird bezüglich einer Drehachse 11, die mit der Symmetrieachse des Stiftes 3 zusammenfällt, drehend angetrieben. Der Stift 3 weist ein Antriebsende 13 und ein dem Antriebsende 13 gegenüberliegendes freies Ende 15 auf. Auch wenn in dies in der Zeichnung nicht dargestellt ist, kann das freie Ende 15 an einem hier nicht dargestellten Lager abgestützt sein. Am Antriebsende 13 erfolgt der drehende Antrieb des Stifts 3 über einen schematisch dargestellten Motor 17, der einen ersten Drehantrieb bildet. Weiterhin ist eine erste axiale Verfahreinrichtung 19 am Antriebsende 13 des Stiftes 3 vorgesehen. Diese kann in den ersten Drehantrieb bzw. den Motor 17 integriert sein, so dass dieser zusätzlich ein axiales Verschieben des Stifts 3 ermöglicht. Es ist aber auch eine eigenständige axiale Verfahreinrichtung denkbar.

In diesem Zusammenhang ist noch einmal darauf hinzuweisen, dass die Begriff "oben" und "unten" im Zusammenhang mit Elementen der Vorrichtung so zu verstehen sind, dass ein oberes Element wie das obere Schulterelement 5 näher zum Antrieb in Form des Motors 19 angeordnet ist als das untere Element in Form des unteren Schulterelements 9. Es kommt bei den Begriffen "oben" und "unten" also nicht auf die absolute Anordnung im Raum sondern auf die relative Anordnung zum Antrieb an.

Zwischen dem Antriebsende 13 und dem freien Ende 15 weist der Stift 3 einen oberen zylindrischen Eingriffsabschnitt 21 zwischen dem oberen Schulterelement 5 und dem Zwischenschulterelement 7 und einen unteren zylindrischen Eingriffsabschnitt 23 zwischen dem Zwischenschulterelement 7 und dem unteren Schulterelement 9 auf, die vorgesehen sind, um drehend mit mindestens einem Werkstück 2 einzugreifen. Bei diesem Werkstück kann es sich insbesondere um ein Werkstück aus Magnesium oder einer Magnesium-Legierung handeln. Die Eingriffsabschnitte 21, 23 können entlang ihres Umfangs eine strukturierte Umfangsfläche aufweisen (nicht dargestellt), um bei dem Eingriff mit dem Material eines bzw. mehrerer Werkstücke eine höhere Reibung oder einen Materialtransport in axialer und radialer Richtung zu erzeugen.

Das obere, auf der zum Antriebsende 13 weisenden Seite des oberen Eingriffsabschnitts 21 angeordnete Schulterelement 5 hat in dem vorliegenden Ausführungsbeispiel eine im Wesentlichen zylinderförmige Gestalt und ist konzentrisch bezüglich der Drehachse 11 um den Stift 3 angeordnet, wobei das obere Schulterelement 5 aus zwei Zylinderabschnitten gebildet ist, von denen der Zylinderteil 25, der sich in Richtung des Zwischenschulterelements 7 erstreckt eine kleinere radiale Ausdehnung aufweist, als der Zylinderteil 27, der sich von dem Zwischenschulterelement 7 weg erstreckt. Ferner weist das obere Schulterelement 5 eine obere Anlagefläche 29 auf, die quer und in diesem Fall senkrecht zur Drehachse 11 angeordnet ist und zum oberen Eingriffsabschnitt 21 hin gerichtet ist. Diese obere Anlagefläche 29 wird durch die Bodenfläche des Zylinders 25 gebildet.

Das obere Schulterelement 5 ist in dem vorliegenden Ausführungsbeispiel drehbar und axial verschiebbar mit dem Stift 3 verbunden. Es ist auch vorstellbar, dass das obere Schulterelement 5 eine im Wesentlichen kegelförmige Gestalt aufweist. Auch bei einer derartigen Ausführungsform weist das Kegelende, das sich von dem Zwischenschulterelement 7 weg erstreckt, eine größere radiale Ausdehnung auf, als die Anlagefläche 29 an dem sich zu dem Zwischenschulterelement 7 hin erstreckenden Kegelende. Eine solche Gestalt des oberen Schulterelements 5, bei der die Abmessungen von der oberen Anlagefläche 29 weg zunehmen, erweist sich als vorteilhaft, um die bei der Reibung während einer linearen Bewegung der oberen Anlagefläche 29 an einem Werkstück 2 entstehende Wärme möglichst gut aufnehmen und von der oberen Anlagefläche 29 wegleiten zu können.

Das zwischen dem oberen und dem unteren Eingriffsabschnitt 21, 23 angeordnete Zwischenschulterelement 7 umfasst in dem vorliegenden Ausführungsbeispiel eine Hülse, die konzentrisch bezüglich der Drehachse 11 um den Stift 3 angeordnet ist, mit einer zylindrischen, sich parallel zur Drehachse 11 erstreckenden Seitenwandung 31 und mit zwei sich radial zur Drehachse 11 erstreckenden Bodenflächen, die eine erste, zum oberen Eingriffsabschnitt weisende, sich quer zur Drehachse erstreckende, Anlagefläche 33 und eine zweite, zum unteren Eingriffsabschnitt weisende, sich quer zur Drehachse erstreckende, Anlagefläche 35 ausbilden.

Die erste Anlagefläche 33 erstreckt sich unmittelbar bis an den oberen Eingriffsabschnitt 21, sodass kein Zwischenraum verbleibt und auch kein weiteres Element zwischen oberem Eingriffsabschnitt 21 und erster Anlagefläche 33 vorgesehen ist. Ebenso erstreckt sich die zweite Anlagefläche 35 bis unmittelbar an den unteren Eingriffsabschnitt 23.

Das untere, auf der zum freien Ende 15 weisenden Seite des unteren Eingriffsabschnitts 23 angeordnete Schulterelement 9 hat in dem vorliegenden Ausführungsbeispiel ebenfalls eine im Wesentlichen zylinderförmige Gestalt mit zwei Abschnitten wie das obere Schulterelement 5 mit geringerem Radius auf der dem Zwischenschulterelement 7 zugewandten Seite und ist konzentrisch bezüglich der Drehachse 11 um den Stift 3 angeordnet. Das untere Schulterelement 9 weist eine untere Anlagefläche 37 auf, die quer zur Drehachse 11 angeordnet ist, zum unteren Eingriffsabschnitt 23 hin gerichtet ist und sich beim Schweißvorgang bis unmittelbar an das Werkstück 2 erstreckt. Diese untere Anlagefläche 37 wird durch eine Bodenfläche des Zylinders gebildet. Das untere Schulterelement 9 ist in dem vorliegenden Ausführungsbeispiel drehfest und in wenigstens einer axialen Position fixierbar mit dem Stift 3 verbunden. Die Vorteile der geometrischen Gestalt, die für das obere Schulterelement 5 bezüglich der thermischen Aufnahme- und Leitfähigkeit erläutert worden sind, gelten natürlich auch für das untere Schulterelement 9.

Die erste Anlagefläche 33 liegt gegenüber und im Wesentlichen parallel zu der oberen Anlagefläche 29, wobei beide Anlageflächen 29, 33 den oberen Eingriffsabschnitt 21 in axialer Richtung begrenzen und dessen axiale Ausdehnung an verschiedene Werkstückdicken anpassen können. Beide Anlageflächen 29, 33 sind konzentrisch bezüglich der Drehachse 11 um den Stift 3 bzw. um die Enden des oberen Eingriffsabschnitts 21 angeordnet und weisen zueinander, sodass die Schulterelemente 5, 7 zur Anlage an einander gegenüberliegende Oberflächen eines oder mehrerer Werkstücke 2, 2', 2" in der ersten Fügezone vorgesehen sind. Das Gleiche gilt für die zweite und die untere Anlagefläche 35, 37 im Bereich des unteren Eingriffsabschnitts 23, sodass die Schulterelemente 7, 9 zur Anlage an einander gegenüberliegende Oberflächen eines oder mehrerer Werkstücke 2, 2', 2" in der zweiten Fügezone vorgesehen sind.

Die Vorrichtung 1 zum Reibrührschweißen kann wie folgt verwendet werden.

Zunächst werden zwei zu verbindende Werkstückteile 2', 2" an denjenigen Flächen, die eine Verbindung eingehen sollen, aneinander angelegt, wie in Fig. 1 und Fig. 2 mit den zu verbindenden, ein kastenprofilförmiges Werkstück 2 bildenden Werkstückteilen 2', 2" dargestellt ist. Daraufhin wird die zuvor beschriebene Vorrichtung 1 zum Reibrührschweißen mit den Eingriffsabschnitten 21, 23 entlang dieser zu verbindenden Flächen bewegt, wobei das Zwischenschulterelement 7 an die Form des Kastenprofils 2 angepasst ist, sodass beide Anlageflächen 29, 33 und 35, 37 an den Werkstückteilen 2', 2" anliegen, wobei der Stift 3, gekoppelt mit dem unteren Schulterelement 9, eine Drehung ausführt. Außerdem ist das obere Schulterelement 5 durch den Antrieb 39, mit dem es drehfest gekoppelt ist, drehend angetrieben, und die Anlageflächen 29, 33 und 35, 37 liegen an den Oberflächen des Werkstücks bzw. der Werkstücke 2 an.

Aneinander angelegt bedeutet hier, dass entweder zwei im Wesentlichen flache Werkstückabschnitte, z.B. Platten oder Bleche, entlang ihrer Stirnseiten, d.h. in der Regel der schmaleren Seiten, aneinander gelegt werden und an diesen Flächen verbunden werden (Stumpfstoß-Verbindung). In diesem Fall verläuft die Drehachse 11 des Stifts 3 während des Schweißvorgangs parallel zur Ebene, die durch die aneinander liegenden Flächen definiert ist. Es kann aber auch heißen, dass die zwei Werkstücke überlappen, d.h. Teile der Oberflächen übereinander gelegt und dann die jeweils angrenzenden Flächen verbunden werden (Überlapp-Verbindung). Hier verläuft die Drehachse 11 während des Schweißens dann senkrecht zu Anlageebene.

Die Vorrichtung 1 kann dann entlang der gesamten Kontaktfläche von einem Ende der aneinander angelegten Werkstückteile 2', 2" zum anderen bewegt werden. Der Stift 3 kann vom Rand her in die Werkstückteile 2', 2" eingebracht werden, oder eine Bohrung kann in den Bereich der Kontaktfläche der Werkstückteile 2', 2" eingebracht werden.

Durch die zuvor beschriebene frei drehbare Lagerung des Zwischenschulterelements 7 an dem Stift 3 wird das Zwischenschulterelement 7 und damit die erste und zweite Anlagefläche 33, 35 durch die Drehung des Stifts 3 nicht mitbewegt. Die erste und zweite Anlagefläche 33, 35 reiben also auch nicht aktiv angetrieben an dem Werkstück bzw. den Werkstückteilen 2', 2".

Damit ist hier realisiert, dass das obere Schulterelement 5, das Zwischenschulterelement 7 und das untere Schulterelement 9 derart gehaltert sind, dass eine aus der oberen Anlagefläche 29 und der ersten Anlagefläche 33 frei drehbar in Bezug auf den Stift 3 ist, während die andere aus der oberen Anlagefläche 29 und der ersten Anlagefläche 33 in Bezug auf die Drehachse 11 drehend angetrieben ist. Außerdem ist eine aus der unteren Anlagefläche 37 und der zweiten Anlagefläche 35 frei drehbar in Bezug auf den Stift 3, während die andere aus der unteren Anlagefläche 37 und der zweiten Anlagefläche 35 in Bezug auf die Drehachse 11 drehend angetrieben ist. In Bezug auf jeden Eingriffsabschnitt 21, 23 ist eine daran angrenzende quer zum Stift 3 verlaufende Anlagefläche angetrieben, während die andere frei drehbar ist.

Auf diese Weise wird die thermische Belastung des Stifts 3 und des Zwischenschulterelements 7 gegenüber einem Reibrührschweißwerkzeug nach dem Stand der Technik mit drehfest fixierten Schulterelementen, also mit im Betrieb rotierenden Schultern, reduziert. Im gleichen Zug wird die mechanische Belastung des Stifts 3 vermindert, da der Stift 3 kein Drehmoment auf das Zwischenschulterelement 7 übertragen muss.

Durch die höhere Geschwindigkeit der Vorrichtung 1 wird die thermische Belastung auf Stift 3, Zwischenschulterelement 7 und Werkstück 2 verringert. Gleichzeitig wird die thermische Belastung des Werkstücks 2 bzw. der Werkstückteile 2', 2" reduziert, wodurch eine höhere Qualität der Schweißverbindung erreicht wird.

Um sich variablen Materialstärken der Werkstückteile 2', 2" anpassen zu können, kann der Stift 3 mitsamt des an einer axialen Position am Stift fixierten unteren Schulterelements 9 Hubbewegungen ausführen, da er auf der Antriebsseite 13 mit einer axialen Verfahreinrichtung 19 gekoppelt ist. Bei kleinerer Materialstärke lässt sich durch ein axiales Verschieben in Richtung des Antriebsendes 13 die untere Anlagefläche 37 wieder in Anlage an die Oberfläche des Werkstücks 2 bringen. Es wird also die Größe des unteren Eingriffsabschnitts 23 variiert. Wenn diese Verfahreinrichtung 19 an der Vorrichtung 1 vorgesehen ist, muss das obere Schulterelement 5 zwingend axial verschiebbar an dem Stift 3 angebracht sein, da es sich sonst mitbewegt und somit den oberen Eingriffsabschnitt 21 vergrößert, wodurch die obere Anlagefläche 29 nicht mehr an der Oberfläche des Werkstücks 2 anliegen würde. Um auch Änderungen der Materialstärke im Bereich des oberen Eingriffsabschnitts 21 ausgleichen zu können, ist für das obere Schulterelement 5 eine weitere axiale Verfahreinrichtung 39 vorgesehen.

Für das obere Schulterelement 5 ist außerdem ein Drehantrieb 41 vorgesehen. Alternativ kann auch das obere Schulterelement 5 drehfest an dem Stift 3 gehaltert werden. Damit würde dann zwar die thermische und mechanische Belastung von Stift 3, oberem Schulterelement 5 und Werkstück 2 aus oben genannten Gründen vergrößert werden, aber der Aufbau im oberen Teil der Vorrichtung 1 würde sich vereinfachen.

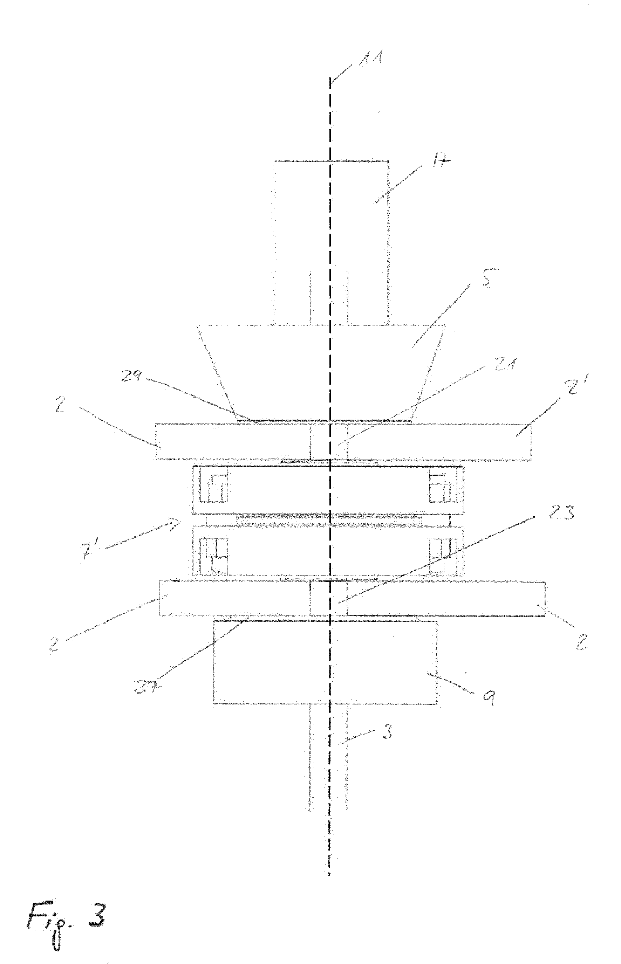

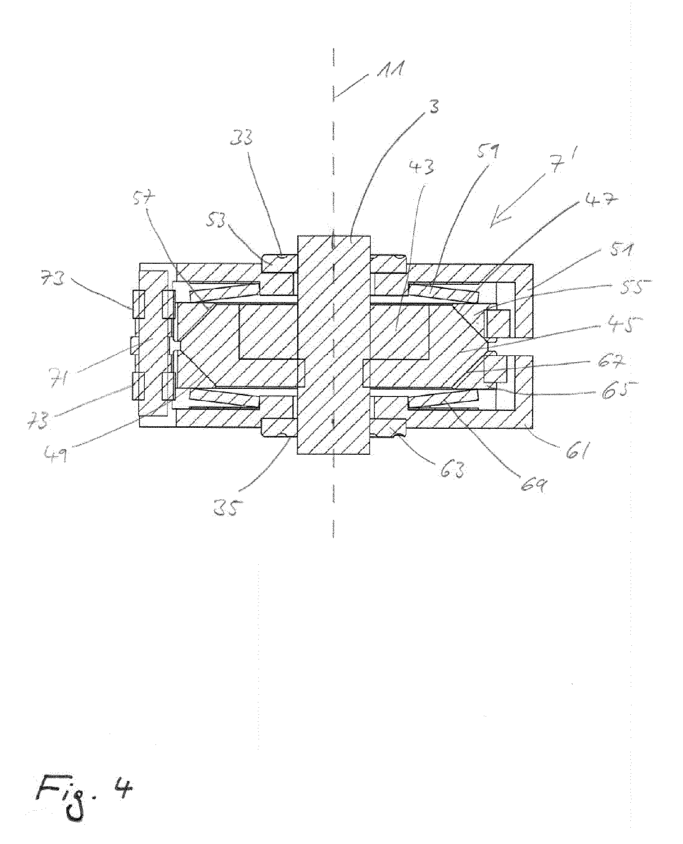

Bei dem in den Fig. 3 und 4 dargestellten zweiten Ausführungsbeispiel einer erfindungsgemäßen Vorrichtung zum Reibrührschweißen von Kastenprofilen ist ebenfalls ein Antrieb 17 für den Stift 3 vorgesehen, wobei der Stift 3 wiederum einen oberen Eingriffsabschnitt 21 und einen unteren Eingriffsabschnitt 23 aufweist, an denen sich parallel zur Drehachse 11 erstreckende Eingriffsflächen ausgebildet sind. Drehfest an dem Stift 3 sind ein oberes Schulterelement 5 sowie ein unteres Schulterelement 9 vorhanden, wobei an dem oberen Schulterelement 5 eine quer zur Drehachse 11 verlaufende und zu dem oberen Eingriffsabschnitt 21 weisende obere Anlagefläche 29 ausgebildet ist. Analog ist an dem unteren Schulterelement 9 eine zu dem unteren Eingriffsabschnitt 23 weisende und ebenfalls quer zur Drehachse 11 verlaufende untere Anlagefläche 37 ausgebildet.

Die Anlagenflächen 29, 37 sowie die Eingriffsabschnitte 21, 23 sind, wie bereits im Zusammenhang mit dem ersten Ausführungsbeispiel beschrieben, dazu vorgesehen, mit den Werkstückteilen 2, 2' zur Anlage zu kommen, so dass bei einem drehenden Antrieb des Stifts 3 durch den Antrieb 17 ein Reibkontakt sowohl der Anlageflächen 29, 37 als auch der Eingriffsabschnitte 21, 23 mit den Werkstücken 2, 2' zustande kommt.

Zwischen dem oberen Eingriffsabschnitt 21 und dem unteren Eingriffsabschnitt 23 ist ein Zwischenschulterelement 7' angeordnet, das im Unterschied zu dem ersten Ausführungsbeispiel nicht frei drehbar an dem Stift 3 gehaltert ist, sondern reibschlüssig mit dem Stift 3 gekoppelt ist.

Dazu ist das Zwischenschulterelement 7', wie in Fig. 4 gezeigt, derart ausgebildet, dass es zunächst einen drehfest über ein Kopplungselement 43 an dem Stift 3 gehalterten Reibblock 45 aufweist, der ringförmig um den Stift 3 herum verläuft. An dem Reibblock 45 ist eine erste, geneigt zur Drehachse 11 verlaufende, sich ringförmig um die Drehachse 11 herum erstreckende erste Reibfläche 47 ausgebildet. Außerdem ist an dem Reibblock 45 eine ebenfalls geneigt zur Drehachse 11 verlaufende und sich auch ringförmig um den Stift 3 herum erstreckende zweite Reibfläche 49 vorgesehen, wobei sowohl die erste Reibfläche 47 als auch die zweite Reibfläche 49 radial nach außen weg von der Drehachse 11 weisen.

Außerdem weist das Zwischenschulterelement 7' ein erstes Schulterteil 51 auf, das ringförmig um den Stift 3 herum angeordnet ist und das die an einem lösbar daran gehalterten ersten Anlageelement 53 ausgebildete erste Anlagefläche 33 aufweist, die sich auch hier quer und insbesondere senkrecht zur Drehachse 11 erstreckt. Außerdem ist an dem ersten Schulterteil 51 in axialer Richtung in Bezug auf die Drehachse 11 verschiebbar, aber drehfest daran gehaltert, ein erstes Ringelement 55 vorgesehen, das eine dritte Reibfläche 57 aufweist, die geneigt zu der Drehachse 11 verläuft und der ersten Reibfläche 47 gegenüberliegt. Schließlich ist zwischen dem ersten Schulterteil 51 und dem ersten Ringelement 55 ein als Tellerfeder ausgebildetes erstes Federelement 59 vorgesehen, das das erste Ringelement 55 in axialer Richtung in Bezug auf die Drehachse 11 derart vorspannt, dass die erste und die dritte Reibfläche 47, 57 mit einer durch die Verformung des ersten Federelements 59 vorgegebenen Vorspannung gegeneinander gedrückt werden.

Außerdem weist das Zwischenschulterelement 7' ein zweites Schulterteil 61 auf, das ebenfalls ringförmig um den Stift 3 herum angeordnet ist und an dem über ein lösbar daran gehaltertes zweites Anlageelement 63 die zweite Anlagefläche 35 ausgebildet ist. Ebenfalls axial in Bezug auf die Drehachse 11 verschiebbar, aber drehfest an dem zweiten Schulterteil 61 gehaltert, ist ein zweites Ringelement 65 an dem zweiten Schulterteil 61 vorgesehen, wobei das zweite Ringelement 65 eine vierte, geneigt zur Drehachse 11 verlaufende und sich ringförmig darum erstreckende Reibfläche 67 aufweist. Dabei liegt die vierte Reibfläche 67 der zweiten, an dem Reibblock 45 ausgebildeten Reibfläche 49 gegenüber, und das zweite Ringelement 65 wird durch ein zweites ebenfalls als Tellerfeder ausgebildetes Federelement 69 in axialer Richtung hin zu dem Reibblock 45 vorgespannt.

Schließlich werden die Schulterteile 51, 61 durch Gewindebolzen 71 und darauf aufgeschraubte Muttern 73 gegeneinander gespannt, so dass dadurch die Vorspannung vorgegeben wird, die die Federelemente 59, 69 auf die Ringelemente 55, 65 ausüben, wodurch wiederum die Stärke des Reibschlusses zwischen den Ringelementen 55, 65 und dem Reibblock 45 eingestellt werden kann.

Bei dem zweiten, in den Fig. 3 und 4 gezeigten Ausführungsbeispiel einer erfindungsgemäßen Vorrichtung werden beim Verschweißen zweier Werkstückteile 2, 2' zu einem kastenförmigen Profil die obere und die untere Anlagefläche 29, 37 in Anlage mit den nach außen weisenden Oberflächen der Werkstückteile 2, 2' gebracht, wobei durch den drehenden Antrieb des oberen und des unteren Schulterelements 5, 9 aufgrund der drehfesten Verbindung mit dem Stift 3 Reibungswärme in den Werkstückteilen 2, 2' auch im Bereich von deren nach außen weisenden Oberflächen erzeugt wird. Darüber hinaus liegen die erste und die zweite Anlagefläche 33, 35 des Zwischenschulterelements 7' an den nach innen weisenden Oberflächen der Werkstückteile 2, 2' an, wobei aber aufgrund der gewählten Vorspannung der Federelemente 59, 69 nur ein vorgegebenes Drehmoment von dem Stift 3 auf die Anlageflächen 33, 35 übertragen werden kann, da hier eine reibschlüssige Verbindung vorliegt.

Damit wiederum ist auch die maximal auf die inneren Oberflächen von der ersten und der zweiten Anlagefläche 33, 35 übertragene Reibungsenergie begrenzt, so dass dadurch einerseits der Wärmeeintrag in die Werkstückteile 2, 2' und andererseits auch die Belastung des Stifts 3 aufgrund der Drehmomentübertragung auf das Zwischenschulterelement 7' begrenzt sind.

Wie zuvor beschrieben, ist bei diesem Ausführungsbeispiel realisiert, dass eine aus der oberen Anlagefläche 29 und der ersten Anlagefläche 33 in Bezug auf die Drehachse drehfest mit einem Antrieb 17 gekoppelt ist, während die andere aus der oberen Anlagefläche 29 und der ersten Anlagefläche 33 reibschlüssig mit dem Stift 3 gekoppelt ist. Analog ist eine aus der unteren Anlagefläche 37 und der zweiten Anlagefläche 35 in Bezug auf die Drehachse 11 drehfest mit dem Antrieb 17 gekoppelt, und zwar über den Stift 3, und die andere aus der unteren Anlagefläche 37 und der zweiten Anlagefläche 35 ist reibschlüssig mit dem Stift 3 gekoppelt.

Insgesamt wird auch bei diesem zweiten Ausführungsbeispiel erreicht, dass die Belastungen, die durch den Reibrührschweißvorgang auf die Werkstückteile 2, 2' und den Stift 3 ausgeübt werden, reduziert sind und insbesondere durch Einstellung der Vorspannung der Federelemente 59, 69 eingestellt werden können.

## Patentansprüche

1. Vorrichtung zum Reibrührschweißen
mit einem um eine Drehachse (11) von einem ersten Drehantrieb (17) antreibbaren Stift (3), der ein Antriebsende (13) und ein freies Ende (15) aufweist,
wobei zwischen dem Antriebsende (13) und dem freien Ende (15) ein oberer und ein unterer zylindrischer Eingriffsabschnitt (21, 23) vorgesehen sind, die sich axial in Richtung der Drehachse (11) erstrecken und deren Umfangsfläche zum Eingriff mit einem oder mehreren Werkstücken (2, 2', 2") vorgesehen ist,
mit einem oberen Schulterelement (5), das auf der zum Antriebsende (13) weisenden Seite des oberen Eingriffsabschnitts (21) konzentrisch bezüglich der Drehachse (11) um den Stift (3) angeordnet ist und das eine zum oberen Eingriffsabschnitt (21) weisende, sich quer zur Drehachse erstreckende obere Anlagefläche (29) aufweist,
mit einem Zwischenschulterelement (7, 7'), das zwischen dem oberen und dem unteren Eingriffsabschnitt (21, 23) konzentrisch bezüglich der Drehachse (11) um den Stift (3) angeordnet ist und das auf der zum Antriebsende (13) weisenden Seite eine zum oberen Eingriffsabschnitt (21) weisende sich quer zur Drehachse (11) erstreckende erste Anlagefläche (33) aufweist und das auf der zum freien Ende (15) weisenden Seite eine zum unteren Eingriffsabschnitt (23) weisende sich quer zur Drehachse (11) erstreckende zweite Anlagefläche (35) aufweist, und
mit einem unteren Schulterelement (9), das auf der zum freien Ende (15) weisenden Seite des unteren Eingriffsabschnitts (23) konzentrisch bezüglich der Drehachse (11) um den Stift (3) angeordnet ist und das eine zum unteren Eingriffsabschnitt (23) weisende, sich quer zur Drehachse erstreckende untere Anlagefläche (37) aufweist,
**dadurch gekennzeichnet,**
**dass** das obere Schulterelement (5), das Zwischenschulterelement (7, 7') und das untere Schulterelement (9) derart gehaltert sind,
- **dass** eine aus der oberen Anlagefläche (29) und der ersten Anlagefläche (33) in Bezug auf die Drehachse (11) drehfest mit einem Antrieb (39) gekoppelt ist und die andere aus der oberen Anlagefläche (29) und der ersten Anlagefläche (33) frei drehbar in Bezug auf den Stift (3) oder reibschlüssig mit dem Stift (3) gekoppelt ist und
- **dass** eine aus der unteren Anlagefläche (37) und der zweiten Anlagefläche (35) in Bezug auf die Drehachse (11) drehfest mit einem Antrieb (39) gekoppelt ist und die andere aus der unteren Anlagefläche (37) und der zweiten Anlagefläche (35) frei drehbar in Bezug auf den Stift (3) oder reibschlüssig mit dem Stift (3) gekoppelt ist.

2. Vorrichtung nach Anspruch 1, wobei das Zwischenschulterelement (7) mit dem Stift (3) frei um die Drehachse (11) drehbar verbunden ist.

3. Vorrichtung nach Anspruch 1, wobei an dem Stift (3) ein Reibblock (45) drehfest gehaltert ist, an dem eine erste und eine zweite Reibfläche (47, 57) ausgebildet sind,
wobei die erste Anlagefläche (33) an einem ersten Schulterteil (51) ausgebildet ist und das erste Schulterteil (51) mit einer drehfest damit verbundenen dritten Reibfläche (57) versehen ist,
wobei die zweite Anlagefläche (35) an einem zweiten Schulterteil (61) ausgebildet ist und das zweite Schulterteil (61) mit einer drehfest damit verbundenen vierten Reibfläche (67) versehen ist und
wobei Vorspannmittel (59, 69) vorgesehen sind, die die erste Reibfläche (47) gegen die dritte Reibfläche (57) und die zweite Reibfläche (49) gegen die vierte Reibfläche (67) vorspannen.

4. Vorrichtung nach Anspruch 3, wobei die erste und die zweite Reibfläche (47, 49) als geneigt zu der Drehachse (11) um die Drehachse (11) umlaufende Flächen ausgebildet sind,
wobei die dritte Reibfläche (57) an einem drehfest an und axial in Bezug auf die Drehachse (11) relativ zu dem ersten Schulterteil (51) verschiebbar gehalterten ersten Ringelement (55) ausgebildet ist, geneigt zu der Drehachse (11) verläuft und der ersten Reibfläche (47) gegenüber liegt,
wobei die vierte Reibfläche (67) an einem drehfest an und axial in Bezug auf die Drehachse (11) relativ zu dem zweiten Schulterteil (61) verschiebbar gehalterten zweiten Ringelement (65) ausgebildet ist, geneigt zu der Drehachse (11) verläuft und der zweiten Reibfläche (49) gegenüber liegt,
wobei zwischen dem ersten Schulterteil (51) und dem ersten Ringelement (55) ein erstes Federelement (59) vorgesehen ist, das das erste Ringelement (55) axial in Bezug auf die Drehachse (11) in Richtung des Reibblocks (45) vorspannt und
wobei zwischen dem zweiten Schulterteil (61) und dem zweiten Ringelement (65) ein zweites Federelement (69) vorgesehen ist, das das zweite Ringelement (65) axial in Bezug auf die Drehachse (11) in Richtung des Reibblocks (45) vorspannt.

5. Vorrichtung nach Anspruch 3 oder 4, wobei die erste Anlagefläche (33) an einem lösbar am erste Schulterteil (51) gehalterten ersten Anlageelement (53) ausgebildet ist und
wobei die zweite Anlagefläche (35) an einem lösbar am zweiten Schulterteil (61) gehalterten zweiten Anlageelement (63) ausgebildet ist.

6. Vorrichtung nach einem der Ansprüche 1 bis 5, wobei das untere Schulterelement (9) in wenigstens einer fest vorgegebenen axialen Position relativ zu dem Stift (3) gehaltert ist und
wobei das obere Schulterelement (5) und das Zwischenschulterelement (7, 7') axial verschiebbar am Stift (3) gehaltert sind.

7. Vorrichtung nach einem der Ansprüche 1 bis 6, wobei das untere Schulterelement (9) drehfest an dem Stift (3) angebracht ist.

8. Vorrichtung nach einem der vorhergehenden Ansprüche, wobei das Zwischenschulterelement (7) als Hülse mit zwei sich radial zur Drehachse (11) erstreckenden Bodenflächen und einer zylindrischen, sich parallel zu Drehachse (11) erstreckenden Seitenwandung (31) ausgebildet ist und
wobei in den Bodenflächen die erste und zweite Anlagefläche (33, 35) ausgebildet ist.

9. Vorrichtung nach einem der vorhergehenden Ansprüche, wobei ein zweiter Drehantrieb (41) vorgesehen ist, der mit dem oberen Schulterelement (5) gekoppelt ist.

10. Vorrichtung nach einem der vorhergehenden Ansprüche, wobei eine erste axiale Verfahreinrichtung (19) vorgesehen ist, die mit dem Stift (3) gekoppelt ist.

11. Vorrichtung nach einem der vorhergehenden Ansprüche, wobei eine zweite axiale Verfahreinrichtung (39) vorgesehen ist, die mit dem oberen Schulterelement gekoppelt ist.
